# EUROPEAN PATENT APPLICATION

(11) **EP 4 120 526 A1**
(43) Date of publication of application: **18.01.2023**
(21) Application number: 21933130.3
(22) Date of filing: 26.03.2021
(51) Int. Cl.: H02K 21/24

(54) **POWER SUPPLY DEVICE**

(71) Applicant: Pacific Industrial Co., Ltd., Ogaki-shi, Gifu 503-8603 (JP)
(72) Inventor: TSUJITA, Yasuhisa, Ogaki-shi, Gifu 503-8603 (JP)
(74) Representative: Kramer Barske Schmidtchen Patentanwälte PartG mbB
(86) International application number: PCT/JP2021/013021
(87) International publication number: WO 2022/201527

(57) **Abstract**

[Object] There is provided a technique for improving durability of a power feeding device attached to a rotary body.

[Solution] A power feeding device 10A of the present embodiment includes a generator 30, where a stator 33 is fixed to a wheel 11, and a cylindrical rotor 32 rotates around a rotation axis J1 of the wheel 11. To the cylindrical rotor 32, there is fixed an inertial member 40. To the stator 33, there is fixed a circuit board 50 on which a power feeding circuit 60 is mounted. The whole of the circuit board 50 or elements that are mounted on the circuit board 50 and protrude from the circuit board 50 are received in a circuit receiving space 39 formed inside the cylindrical rotor 32.

## Description

### TECHNICAL FIELD

The present disclosure relates to a power feeding device attached to a rotary body.

### BACKGROUND ART

As this type of power feeding circuit, there is known a power feeding circuit fixed to a wheel (see, for example, Patent Document 1).

### RELATED ART DOCUMENTS

### PATENT DOCUMENT

Patent Document 1: JP 2000-278923 A (paragraph [0022], Fig. 2)

### SUMMARY OF THE INVENTION

### TECHNICAL PROBLEMS TO BE SOLVED BY THE INVENTION

However, in a power feeding device attached to the rotary body as in the above-described example, the power feeding device receives a centrifugal force due to rotation; therefore, the durability of the circuit board is sometimes a problem. Therefore, the present disclosure provides a technique for improving durability of a power feeding device attached to a rotary body.

### MEANS OF SOLVING THE PROBLEMS

The invention of claim 1 made to solve the above problem is a power feeding device including: a generator, the generator including a stator fixed to a wheel and a cylindrical rotor that rotates around a rotation axis of the wheel; an inertial member that is fixed to the cylindrical rotor and maintains a constant attitude by its own weight; a circuit board that is fixed to the stator and is mounted with a power feeding circuit to supply an output of the generator to a load; and a circuit receiving space that is provided inside the cylindrical rotor and receives a whole of the circuit board or an element that is mounted on the circuit board and protrudes from the circuit board.

### BRIEF DESCRIPTION OF DRAWINGS

Fig. 1 is a perspective view of a vehicle according to a first embodiment of the present disclosure.
Fig. 2 is a cross-sectional side view of the power feeding device.
Fig. 3 is an exploded perspective view of the power feeding device.
Fig. 4 is a circuit diagram of the power feeding device and a load.
Fig. 5 is a cross-sectional side view of a power feeding device according to a second embodiment.

### MODE FOR CARRYING OUT THE INVENTION

### [First embodiment]

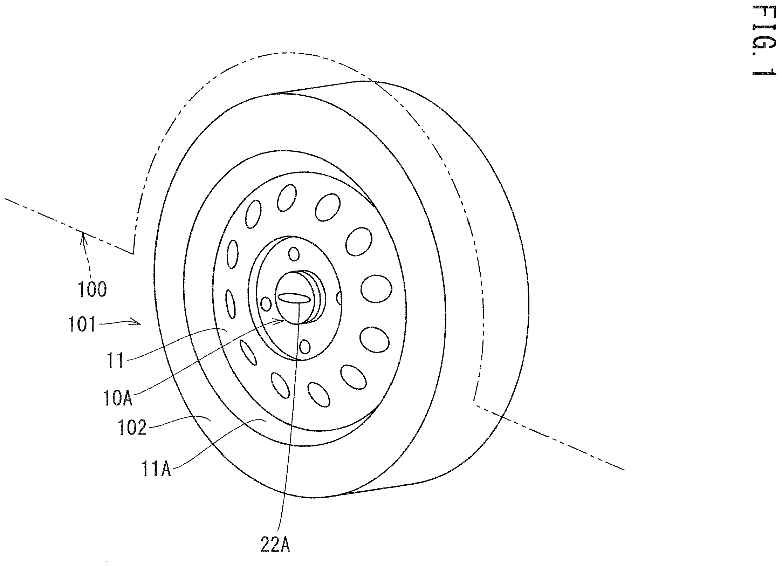

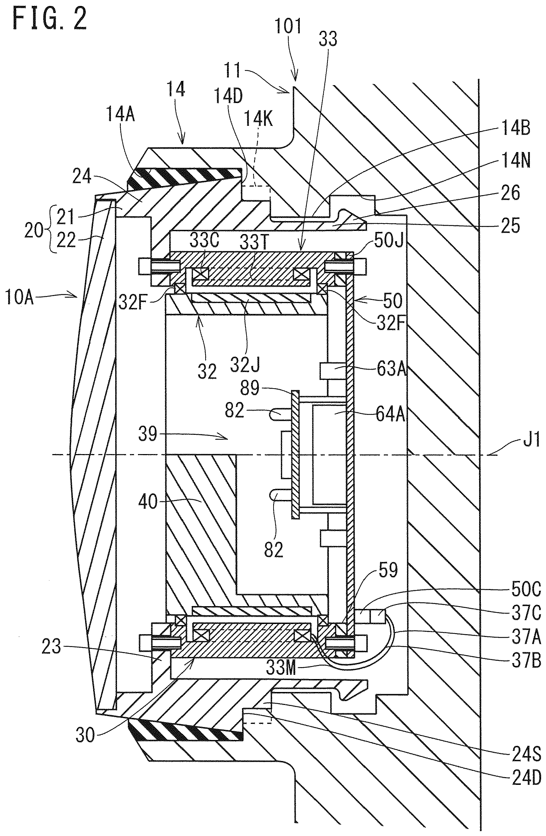

A power feeding device 10A according to a first embodiment of the present disclosure will be described with reference to Figs. 1 to 4. As illustrated in Fig. 1, the power feeding device 10A is attached to a central part of each wheel 101 of a vehicle 100. In order to attach the power feeding device 10A, in a central part of a wheel 11 (corresponding to a "rotary body" of the present disclosure) of each wheel 101, there is provided a circular recess 14 opened outward and closed on the deeper side, as illustrated in Fig. 2. On an inner side of the circular recess 14, there is provided a larger diameter portion 14A in which the diameter of an end part on the opening side is enlarged in a stepwise manner, and in a smaller diameter portion 14B on the deeper side with respect to a stepped surface 14D, there is formed a locking groove 14N in which locking projections 26 (to be described later) of the power feeding device 10A are locked. The stepped surface 14D is provided with a plurality of engaging recesses 14K that is engaged in a concavo-convex manner with detent projections 27 (to be described later) of the power feeding device 10A.

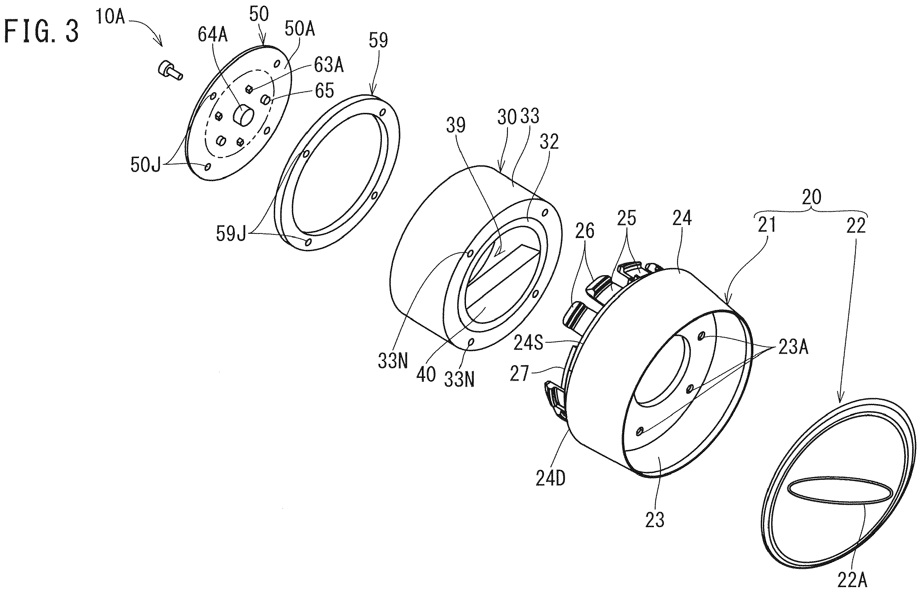

As illustrated in Fig. 3, the power feeding device 10A has a unit structure in which a generator 30 is attached to a housing 20 and a circuit board 50 is attached to the generator 30. The housing 20 is, for example, made of resin and is divided into a housing main body 21 and a lid body 22. The housing main body 21 is provided with a cylinder wall 24 having a substantially cylindrical shape, and is disposed such that a central axis thereof coincides with a rotation axis J1 of the wheel 11 (see Fig. 2). Hereinafter, the direction parallel to the rotation axis J1 in the power feeding device 10A is referred to as a "front-rear direction".

A front end opening of the cylinder wall 24 is closed by the lid body 22, and a space between the lid body 22 and the cylinder wall 24 is waterproof-processed. An emblem 22A is formed on an outer surface of the lid body 22. In addition, for example, the portion where the emblem 22A is formed has translucency, and the emblem 22A emits light when LEDs 82 to be described later are turned on.

A stepped surface 24D is formed at a position near the rear end of an outer surface of the cylinder wall 24, and the rear side with respect to the stepped surface 24D is a smaller diameter portion 24S. A plurality of locking pieces 25 protrudes from positions slightly displaced inward from the outer surface of a rear surface of the cylinder wall 24. The locking pieces 25 each have a structure including a locking projection 26 at a tip of a cantilever beam extending rearward. A plurality of detent projections 27 protrudes from an outer edge part of a rear surface of the housing 20. The plurality of locking pieces 25 and the plurality of detent projections 27 are dispersedly arranged in the circumferential direction of the cylinder wall 24, and a center of gravity of a whole of the housing 20 is located on the central axis of the cylinder wall 24.

A support wall 23 having an annular shape projects inward from a position near the front end inside the cylinder wall 24, and the generator 30 is fixed to the rear surface of the support wall 23. The generator 30 includes a cylindrical rotor 32 inside a stator 33 having a cylindrical shape, for example. As shown in Fig. 2, the cylindrical rotor 32 is rotatably supported, at both end parts in the axial direction, by the stator 33 via a pair of bearings 32F.

The generator 30 is, for example, an AC motor, in which a plurality of magnets 32J is provided on an outer surface of the cylindrical rotor 32 and in which a plurality of teeth 33T is provided on the stator 33, and an electromagnetic coil 33C is wound around each of the teeth 33T. In addition, a pair of ends of a winding wire 33M of the electromagnetic coils 33C are drawn sideward from a side surface of the stator 33, and terminal metal fittings are connected to the ends and housed in a connector 37C.

The generator 30 of the present embodiment includes a pair of output electrodes 37A and 37B to output an alternating current, but may instead include, for example, three output electrodes to output a three-phase alternating current.

As illustrated in Fig. 3, screw holes 33N are formed at respective ones of a plurality of positions in the circumferential direction at both end parts of the stator 33 in the axial direction. Then, screws inserted through through-holes 23A formed at a plurality of positions of the support wall 23 in the circumferential direction are fastened to the plurality of screw holes 33N in the front end of the stator 33, so that the generator 30 is fixed to the housing 20.

An inertial member 40 is fixed to a front end inside the cylindrical rotor 32. The inertial member 40 has a semicircular shape, and the inertial member 40 is fixed to the cylindrical rotor 32 such that a semicircular arc surface, which is an outer surface of the inertial member 40, is overlapped with a half of an inner peripheral surface of the cylindrical rotor 32. As a result, a center of gravity of the combined portion of the inertial member 40 and the cylindrical rotor 32 is disposed at a position shifted from the rotation axis J1 (see Fig. 2), and the cylindrical rotor 32 rotates relatively to the stator 33 in association with rotation of the wheel 11. An electric power generated by the generator 30 by the relative rotation between the cylindrical rotor 32 and the stator 33 is output as an alternating current between the pair of output electrodes 37A and 37B. A part, of a cylindrical rotor 32, on the rear side with respect to the inertial member 40 serves as a circuit receiving space 39, and partially receives a plurality of elements protruding from the circuit board 50 to be described below.

The circuit board 50 is fixed to a rear end face of the stator 33. The circuit board 50 has, for example, a disk shape that just overlaps the rear end face of the stator 33. An outer edge part of the circuit board 50 is overlapped with the rear end face of the stator 33 interposing therebetween an annular spacer 59 having a diameter substantially the same as the outer diameter of the circuit board 50, and screws inserted through a plurality of through-holes 50J and 59J respectively formed in the circuit board 50 and the spacer 59 are fastened to the plurality of screw holes 33N at the rear end of the stator 33, so that the circuit board 50 is fixed to the stator 33.

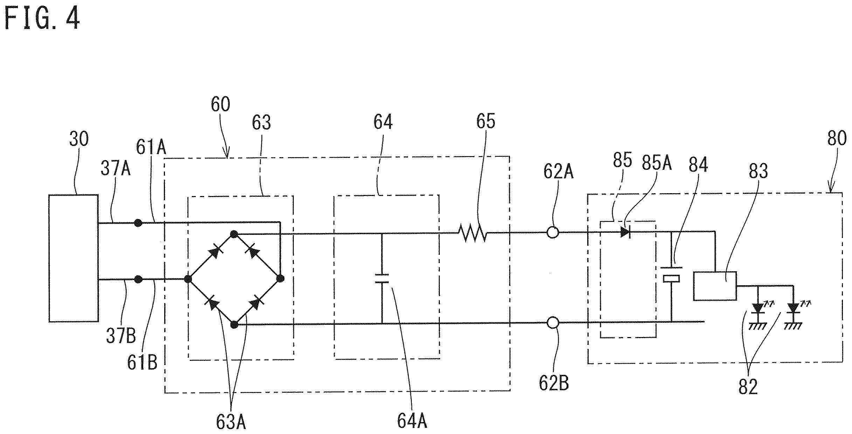

As illustrated in Fig. 4, on the circuit board 50, there is provided a power feeding circuit 60 for applying the power generated by the generator 30 to a load. As illustrated in Fig. 2, the power feeding circuit 60 includes a pair of input electrodes 61A and 61B in a connector 50C fixed to a rear surface 50B of the circuit board 50. And, by coupling with the connectors 37C and 50C housing the output electrodes 37A and 37B of the generator 30, the alternating current output by the generator 30 is supplied between the pair of input electrodes 61A and 61B of the power feeding circuit 60. The power feeding circuit 60 converts the alternating current into a pulsating current by a diode circuit 63, smooths the pulsating current by a smoothing circuit 64, and outputs the smoothed current between a pair of output electrodes 62A and 62B. That is, the power feeding circuit 60 of the present embodiment is a rectifier circuit that rectifies the alternating current output by the generator 30.

As illustrated in, for example, Fig. 4, the diode circuit 63 is a general bridge circuit having, for example, four diodes 63A. The smoothing circuit 64 is configured with a smoothing capacitor 64A parallel-connected between the pair of output electrodes 62A and 62B of the power feeding circuit 60. In addition, a resistor 65 as a current reducing element is connected between the smoothing circuit 64 and one output electrode 62A. As shown in Fig. 3, the plurality of elements included in the power feeding circuit 60 is mounted on a front surface 50A of the circuit board 50, protrudes forward, and is received in the circuit receiving space 39 of the cylindrical rotor 32. More specifically, among the elements included in the power feeding circuit 60, the smoothing capacitor 64A of the smoothing circuit 64 having the largest mass is disposed at the center of the circuit board 50, and the plurality of diodes 63A included in the diode circuit 63 and the resistor 65 are dispersedly disposed around the smoothing capacitor 64A, so that the center of gravity of the entire circuit board 50 is disposed at a central part of rotation.

As shown in Fig. 2, an electric decoration board 89 is attached on the front side of the circuit board 50 via a plurality of support posts, and housed in the circuit receiving space 39. An electric decoration circuit 80 illustrated in Fig. 4 is mounted, as a load, on the electric decoration board 89, and is connected to the pair of output electrodes 62A and 62B of the power feeding circuit 60 of the circuit board 50. Specifically, the electric decoration board 89 has a disk shape, and is disposed such that the center of the electric decoration board 89 coincides with the rotation axis J1. The electric decoration circuit 80 includes: a plurality of LEDs 82 for electric decoration; a control circuit 83 that controls lighting of the LEDs; a secondary battery 84 that is a power source for the LEDs and the control circuit 83; and a charging circuit 85 for charging the secondary battery 84 (see Fig. 4). In addition, the control circuit 83 includes a wireless circuit (not illustrated) to receive a turn-on command and turn-off command by a wireless signal from a main body side of the vehicle 100, and the LEDs 82 are turned on or off according to the command. Furthermore, the output electrodes 62A and 62B of the power feeding circuit 60 are connected to the charging circuit 85 through a cable (not illustrated) or the like, and the secondary battery 84 is charged when a remaining capacity of the secondary battery 84 is low. The elements mounted on the electric decoration board 89 are also disposed such that the center of gravity of the whole electric decoration board 89 is located at the central part of rotation.

The housing 20 is fixed to the wheel 11 in the following manner. Specifically, the plurality of detent projections 27 of the housing 20 and the plurality of engaging recesses 14K (see Fig. 2) of the wheel 11 are opposed to each other, and the housing 20 is then pushed into the circular recess 14 of the wheel 11 from the side of the plurality of locking pieces 25. Then, the plurality of locking pieces 25 is bent so as to shrink inward, so that the plurality of detent projections 27 is engaged in a concavo-convex manner with the plurality of engaging recesses 14K. Then, when the stepped surface 24D of the housing 20 comes into contact with the stepped surface 14D of the circular recess 14, the plurality of locking pieces 25 elastically returns, and the locking projections 26 get engaged with the locking groove 14N of the wheel 11. As a result, the housing 20 is integrally rotatably fixed to the wheel 11. In addition, a sealing material is applied between an inner surface of the cylinder wall 24 of the housing 20 and an inner surface of the circular recess 14, and a space, of the circular recess 14, on the deeper side with respect to the stepped surface 14D is sealed to be in a waterproof state and becomes a waterproof space.

The configuration of the power feeding device 10A of the present embodiment has been described above. The power feeding device 10A is stopped and does not generate power while the vehicle 100 is stopped. However, as a diode 85A that is included in the charging circuit 85 of the electric decoration circuit 80, which is a load, is included, power is not supplied from the secondary battery 84 of the electric decoration circuit 80 to the power feeding device 10A.

When the vehicle 100 travels, the stator 33 of the generator 30 fixed to the wheel 11 of the wheel 101 rotates with respect to a road surface together with the wheel 11; however, the inertial member 40's own weight restricts rotation of the cylindrical rotor 32 of the generator 30 with respect to the road surface, and the cylindrical rotor 32 therefore rotates relatively to the stator 33. As described above, in the power feeding device 10A of the present embodiment, the rotation of the wheel 11 and an inertia of the inertial member 40 are used to rotate the cylindrical rotor 32 relatively to the stator 33 of the generator 30, thereby generating power, and the power can be supplied to the electric decoration circuit 80. In the generator 30, the elements mounted on the circuit board 50 are received in the circuit receiving space 39 inside the cylindrical rotor 32, the plurality of elements can therefore be gathered in the vicinity of the center of the rotation axis J1, and a centrifugal force applied to the circuit board 50 is accordingly reduced; therefore, durability of the power feeding device 10A is improved, and, at the same time, the generator 30 and the power feeding device 10A are made compact in the axial direction of the rotation axis J1. In addition, the electric decoration board 89 on which the electric decoration circuit 80 serving as an electric load of the power feeding device 10A is mounted is also housed in the circuit receiving space 39; therefore, the entire power feeding device 10A including the load is also made compact in this respect. In addition, in the circuit board 50 and the electric decoration board 89, the plurality of elements is disposed such that the center of gravity of the whole of the circuit board and the electric decoration board is disposed at the center of rotation. Therefore, this also improves the durability of the power feeding device 10A.

### [Second embodiment]

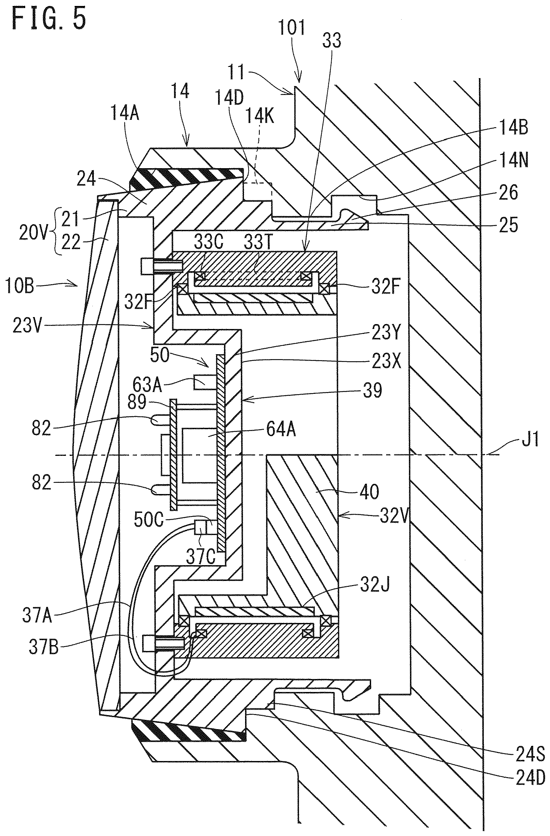

A power feeding device 10B of the present embodiment is illustrated in Fig. 5. In the power feeding device 10B, the inertial member 40 is disposed in a rear part of a cylindrical rotor 32V, and the front side with respect to the inertial member 40 of the cylindrical rotor 32V is the circuit receiving space 39. An inner diameter of a support wall 23V of a housing 20V is smaller than an inner diameter of the cylindrical rotor 32V, and a board housing wall 23X having a cylindrical shape extends rearward from an inner edge part of the support wall 23V and is received in the circuit receiving space 39. Furthermore, a rear end of the board housing wall 23X is closed by a rear end wall 23Y. The circuit board 50 and the electric decoration board 89 described in the first embodiment are housed in the board housing wall 23X, and the circuit board 50 is fixed to the rear end wall 23Y. A winding wire 33M of a generator 30V passes through an electric wire insertion hole 23E formed in the support wall 23V, is taken into the board housing wall 23X from the front, and is connected to the power feeding circuit 60 of the circuit board 50. The configuration of the present embodiment also achieves the same actions and effects as the first embodiment.

### [Other embodiments]

(1) The generators 30 and 30V of the first and second embodiments may have the same structure as a brushed DC motor. In this case, a direct current is output from the generator 30 or 30V; therefore, the power feeding circuit 60 only has to include an electric path for relaying between the pair of output electrodes 37A and 37B of the generators 30 or 30V and the electric decoration circuit 80, or only has to include a voltage dividing circuit for adjusting a voltage to be applied to the electric decoration circuit 80.
(2) In the first and second embodiments, the load that receives power from the power feeding device 10A or 10B is the electric decoration circuit 80, but the load is not limited thereto, and may be a tire monitoring device for monitoring a state of a tire mounted on the wheel 11.
(3) In the power feeding devices 10A and 10B of the first and second embodiments, the load includes the secondary battery 84, and the power feeding devices 10A and 10B do not include a secondary battery. However, the power feeding devices 10A and 10B themselves may include a secondary battery. In that case, power can be supplied from the power feeding device 10A to the load also when the vehicle 100 is stopped.
(4) Furthermore, the inertial member 40 is not limited to the above shape, and may have any shape and any material as long as the inertial member has a center of gravity at a position shifted from the rotation axis J1, and does not have to be disposed inside the cylindrical rotor 32.

Although the present specification and the drawings disclose specific examples of the techniques included in the claims, the techniques according to the claims are not limited to these specific examples, and include various variations and modifications of the specific examples and, in addition, include a part alone taken out from the specific examples.

### DESCRIPTION OF THE REFERENCE NUMERAL

- 10A, 10B: power feeding device
- 11: wheel
- 20, 20V: housing
- 30, 30V: generator
- 32, 32V: cylindrical rotor
- 33: stator
- 39: circuit receiving space
- 40: inertial member
- 50: circuit board
- 60: power feeding circuit
- 80: electric decoration circuit (load)
- J1: rotation axis

## Claims

1. A power feeding device comprising:
a generator, the generator including: a stator fixed to a wheel; and a cylindrical rotor that rotates around a rotation axis of the wheel;
an inertial member that is fixed to the cylindrical rotor and maintains a constant attitude by its own weight;
a circuit board that is fixed to the stator and is mounted with a power feeding circuit to supply an output of the generator to a load; and
a circuit receiving space that is provided inside the cylindrical rotor and receives a whole of the circuit board or an element that is mounted on the circuit board and protrudes from the circuit board.

2. The power feeding device according to claim 1, wherein
the power feeding circuit includes a rectifier circuit that rectifies an alternating current output by the generator, and
the rectifier circuit includes a smoothing capacitor.

3. The power feeding device according to claim 1 or 2, wherein a plurality of the elements is dispersed around the rotation axis to position a center of gravity of a whole of the circuit board at a central part of rotation.

4. The power feeding device according to any one of claims 1 to 3, wherein the circuit board has a circular shape, and is fixed with an outer edge part of the circuit board overlapped with an end face of the stator.

5. The power feeding device according to any one of claims 1 to 4, wherein a whole or part of the inertial member is housed inside the cylindrical rotor.

6. The power feeding device according to any one of claims 1 to 5, wherein the load includes a tire monitoring device for monitoring a state of a tire mounted on the wheel.

7. The power feeding device according to any one of claims 1 to 6, wherein the load includes a secondary battery.

8. The power feeding device according to any one of claims 1 to 7, wherein the load includes a light emitting element for electric decoration.
